# FASCICULE DE BREVET EUROPEEN

(11) **EP 1 695 268 B1**
(45) Date de publication et mention de la délivrance du brevet: **27.06.2007**
(21) Numéro de dépôt: 04805586.7
(22) Date de dépôt: 30.11.2004
(51) Int. Cl.: G06K 19/077, B42D 15/00

(54) **LIVRET D'IDENTITE A DISPOSITIF D' IDENTIFICATION RADIOFREQUENCE**
IDENTIFIKATIONSHEFT MIT HOCHFREQUENZ-IDENTIFIKATIONSEINRICHTUNG
IDENTIFICATION BOOKLET HAVING A RADIO FREQUENCY IDENTIFICATION DEVICE

(30) Priorité: 02.12.2003 FR 0314144
(43) Date de publication de la demande: 30.08.2006
(73) Titulaire: ASK S.A., 06560 Valbonne Sophia Antipolis (FR)
(72) Inventeur: BON, Xavier, F-13290 Les Milles (FR)
(86) Numéro de dépôt international: PCT/FR2004/003061
(87) Numéro de publication internationale: WO 2005/057483

(56) Documents cités:
- WO-A-00/26856
- WO-A-01/20564
- WO-A-02/089052
- US-A- 5 528 222

## Description

### Domaine technique

La présente invention concerne les livrets d'identité tels que les passeports et concerne en particulier un livret d'identité comportant un dispositif d'identification radiofréquence.

### Etat de la technique

Les dispositifs d'identification radiofréquence (RFID) sans contact sont de plus en plus utilisés pour l'identification des personnes circulant dans des zones à accès contrôlé ou transitant d'une zone à une autre. Un dispositif RFID sans contact est un dispositif constitué d'une antenne et d'une puce connectée aux bornes de l'antenne. La puce n'est généralement pas alimentée et reçoit son énergie par couplage électromagnétique entre l'antenne du lecteur et l'antenne du dispositif RFID, des informations sont échangées entre le dispositif RFID et le lecteur et en particulier les informations stockées dans la puce qui ont trait à l'identification du possesseur de l'objet sur lequel se trouve le dispositif RFID et son autorisation à pénétrer dans une zone à accès contrôlé.

Ainsi, les passeports peuvent incorporer des dispositifs RFID pour l'identification du possesseur du passeport. La mémoire de la puce contient des informations telles que l'identité du possesseur du passeport, son pays d'origine, sa nationalité, les visas des différents pays visités, les dates d'entrée, les restrictions de circulation, etc. Un tel passeport est décrit dans le brevet US 5.528.222 ou dans les demandes de brevet WO/00/26856 et WO/02/089 052. Dans ces documents, le dispositif RFID se trouve incorporé dans le plat de couverture supérieur du passeport. Il est généralement inséré entre le plat renforcé et la page de garde du cahier des pages du passeport qui est contrecollée au verso du plat supérieur renforcé.

Malheureusement, il est relativement aisé pour un fraudeur de falsifier un tel passeport et d'en faire un faux passeport. Il lui suffit de décoller la page de garde pour avoir accès au dispositif RFID et de, soit remplacer la couverture par une nouvelle couverture comportant un autre dispositif RFID, soit simplement remplacer la puce par une autre puce de manière à ce que les informations fournies par le dispositif RFID correspondent aux informations se trouvant à l'intérieur du passeport falsifié.

### Exposé de l'invention

C'est pourquoi le but de l'invention est de fournir un livret d'identité tel qu'un passeport utilisant un dispositif d'identification radiofréquence dans lequel le montage de l'antenne est réalisé de manière à entraîner sa destruction lors de toute tentative de falsification du livret.

L'objet de l'invention est donc un livret d'identité, notamment un passeport, comprenant une couverture en papier renforcé formée d'un plat supérieur et d'un plat inférieur, un cahier intérieur dont les pages de garde supérieure et inférieure sont contrecollées respectivement au verso du plat supérieur et au recto du plat inférieur et un dispositif d'identification radiofréquence (RFID) formé d'une puce et d'une antenne connectée aux bornes de la puce, au moins une partie du dispositif RFID étant insérée entre le plat supérieur et la page de garde supérieure ou entre le plat inférieur et la page de garde inférieure. L'antenne comprend une première partie d'antenne disposée sur la surface du plat supérieur et/ou inférieur destinée à être contrecollée avec la page de garde correspondante et une seconde partie d'antenne disposée sur la surface de la page de garde supérieure et/ou inférieure destinée à être contrecollée avec le plat correspondant, les première et seconde parties d'antenne étant connectées pour constituer l'antenne lorsque les pages de garde sont contrecollées avec les plats.

### Description brève des figures

Les buts, objets et caractéristiques de l'invention ressortiront mieux à la lecture de la description qui suit faite en référence aux dessins joints dans lesquels :
la figure 1A représente la couverture du livret selon l'invention formée du plat supérieur et du plat inférieur sur laquelle est située la première partie d'antenne dans un premier mode de réalisation,
la figure 1B représente les pages de garde du livret sur lesquelles est située la seconde partie d'antenne selon le premier mode de réalisation,
la figure 2 représente une vue en perspective du livret montrant la formation de l'antenne du dispositif RFID par juxtaposition au moment du contrecollage des première et seconde parties d'antenne représentées sur les figures 1A et 1B,
la figure 3A représente la couverture du livret selon l'invention formée du plat supérieur et du plat inférieur sur laquelle est située la première partie d'antenne dans un second mode de réalisation,
la figure 3B représente les pages de garde du livret sur lesquelles est située la seconde partie d'antenne selon le second mode de réalisation, et
la figure 4 représente une vue en perspective du livret montrant la formation de l'antenne du dispositif RFID à partir des première et seconde parties d'antenne représentées sur les figures 3A et 3B au moment du contrecollage.

### Description détaillée de l'invention

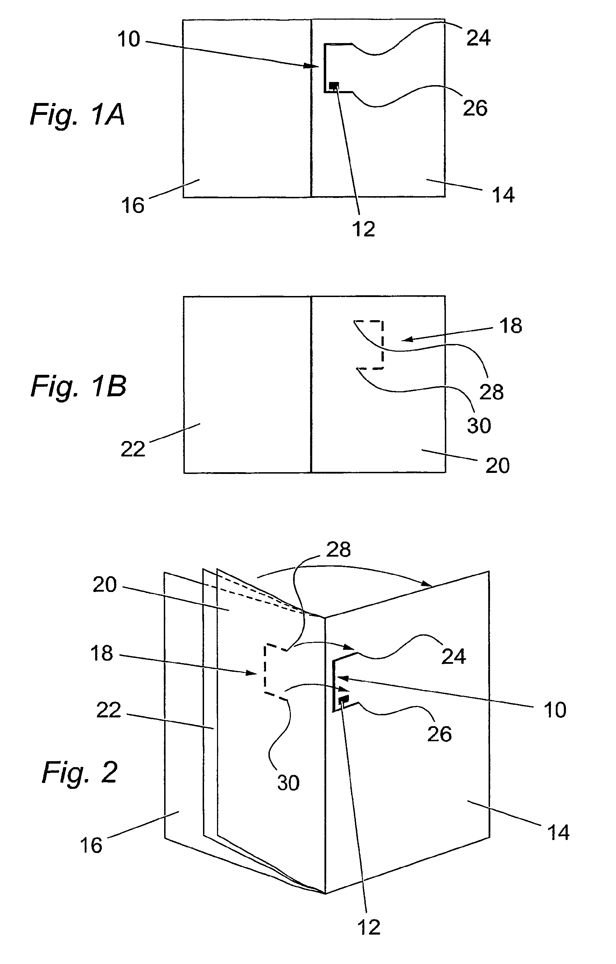

Selon un premier mode de réalisation de l'invention, la première partie d'antenne 10 comportant la puce 12 est sur le recto du plat inférieur de la couverture 14 d'un livret d'identité tel qu'un passeport illustré sur la figure 1A. Le verso du plat supérieur 16 ne comporte pas d'antenne. A noter que la première partie d'antenne 10 peut être une bande de métal collée sur la page mais il est préférable de fixer l'antenne par dépôt sérigraphique d'une encre contenant des particules de métal tel que l'argent.

La seconde partie d'antenne 18 illustrée sur la figure 1B est fixée, de préférence par sérigraphie comme mentionné ci-dessus, au verso de la page de garde inférieure 20 du cahier intérieur des pages du livret d'identité (c'est pour cette raison qu'elle est représentée en pointillés sur la figure) alors que la page de garde supérieure 22 du cahier ne comporte pas d'antenne.

En supposant que le livret est un passeport auquel s'applique l'invention de préférence, la méthode de confection consiste à élaborer le cahier intérieur formant les pages centrales du livret en utilisant un fil sécurisé pour les relier entre elles. Puis les pages de garde sont contrecollées sur les plats de couverture, la page de garde 22 étant contrecollée au plat supérieur 16 alors que la page de garde inférieure 20 est contrecollée au plat inférieur 14.

Comme illustré sur la figure 2, la première partie d'antenne 10 et la seconde partie d'antenne 18 ont été déposées respectivement sur le plat inférieur 14 et la page de garde 20 de telle sorte que, au moment du contrecollage, l'extrémité 24 de la première partie d'antenne 10 vient se connecter à l'extrémité 28 de la seconde partie d'antenne 18, et l'extrémité 26 de la première partie d'antenne vient se connecter à l'extrémité 30 de la seconde partie d'antenne 18.

La connexion entre les extrémités de la première partie d'antenne 10 et les extrémités de la seconde partie d'antenne 18 peut se faire simplement par chevauchement entre deux petites portions d'antenne situées aux extrémités. Un tel chevauchement suffit pour assurer le contact. Même un contact imparfait ou une absence de contact suffit dans la mesure où la connexion est surtout capacitive. A noter que la valeur de la capacité intervient peu et ne perturbe aucunement la fréquence d'accord de l'antenne (généralement de 13,56 MHz).

La connexion peut se faire également en déposant sur les deux extrémités de l'une des parties d'antenne, par exemple la première partie, un point de colle sous forme d'excroissance réalisée à l'aide d'une résine époxy conductrice.

En supposant qu'un fraudeur essaie de décoller les pages de garde de manière à falsifier le passeport, il va forcément séparer les deux parties d'antenne et s'interdire toute utilisation ultérieure aussi bien de la couverture que du cahier des pages intérieures, à moins de procéder au dépôt de la partie d'antenne manquante par sérigraphie, ce qui n'est pas aisé.

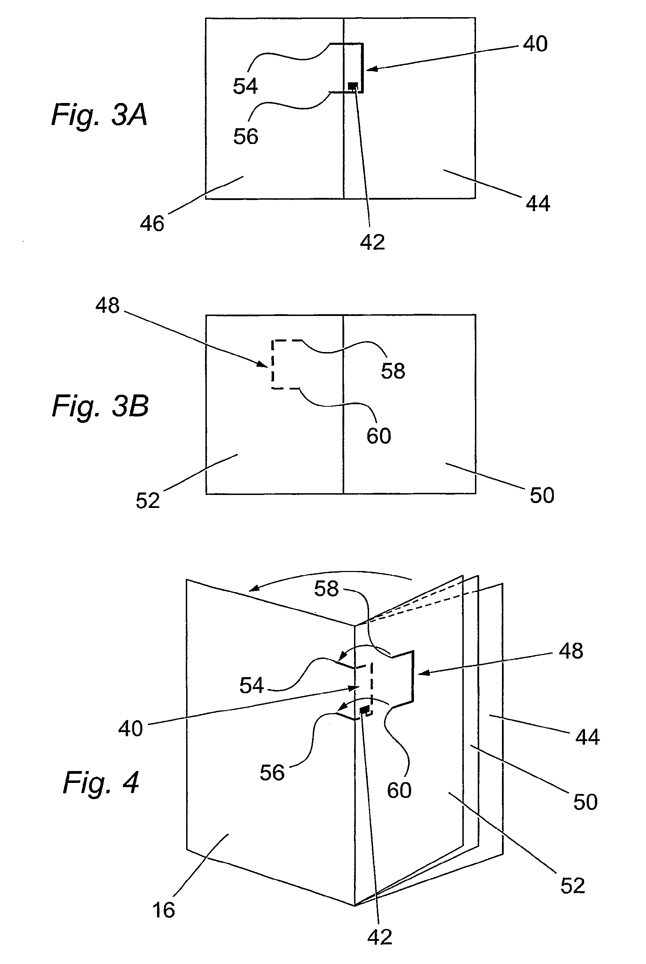

Selon un deuxième mode de réalisation illustré sur les figures 3A, 3B et 4, une partie d'antenne est placée sur les deux plats de couverture et donc chevauche la pliure située à l'intersection des deux plats de couverture. Ainsi, la première partie d'antenne 40 comportant la puce 42 comprend une portion sur le recto du plat inférieur 44 mais également une portion sur le verso du plat supérieur 46.

La seconde partie d'antenne se trouve entièrement sur le recto de la page de garde supérieure 52 du cahier des pages du passeport (elle est donc en pointillés sur la figure 3B) alors qu'il n'y a rien sur le verso de la page de garde inférieure 50. A noter que, comme dans le mode de réalisation précédent, l'antenne peut être une bande de métal mais il est préférable que l'antenne soit obtenue par dépôt sérigraphique d'encre conductrice. L'encre conductrice utilisée est préférentiellement une encre polymère chargée en éléments conducteurs tels que l'argent, l'or, le cuivre ou le carbone. Le matériau utilisé pour sérigraphier l'antenne peut être aussi un matériau flexible tel qu'un polymère conducteur. A l'endroit où l'antenne chevauche la pliure du livret il est également possible de réaliser un joint flexible par ajout de matière conductrice telle qu'une résine époxy chargée en argent ou d'éléments conducteurs sur l'antenne à l'endroit de la pliure du livret afin de rendre flexible l'antenne pour qu'elle ne se casse pas.

Lorsque les pages de garde 50 et 52 sont contrecollées sur les plats 44 et 46, l'extrémité 54 de la première partie d'antenne 40 vient se connecter à l'extrémité 58 de la seconde partie d'antenne 48 et l'extrémité 56 de la première partie d'antenne 40 vient se connecter à l'extrémité 60 de la seconde partie d'antenne 48.

Comme dans le cas précédent, la connexion peut se faire par simple contact dû au chevauchement entre des portions des deux parties de l'antenne ou au moyen d'une résine époxy conductrice.

Le second mode de réalisation présente une caractéristique essentielle qui n'existe pas dans le premier mode de réalisation. En effet, dans le premier mode de réalisation, l'antenne reste planaire, que le passeport soit ouvert ou fermé, et donc joue toujours sa fonction d'antenne. Dans le second mode de réalisation, l'antenne est repliée lorsque le passeport est fermé et donc n'est plus opérationnelle dans ce cas. Par conséquent, le passeport ne peut être lu que s'il est ouvert et présenté à plat devant un lecteur, alors qu'il ne peut pas être lu en position fermée. Il ne pourra donc jamais être lu à l'insu de son possesseur lorsqu'il se trouve dans sa poche ou dans son sac, ce qui représente une caractéristique de sécurité incontestable.

Cependant, selon le premier mode de réalisation, en supposant que le livret d'identité est un passeport auquel s'applique l'invention il est avantageux de sérigraphier sur la dernière page du cahier formant les pages centrales du passeport un écran qui viendra se plaquer contre le dispositif RFID formé des deux parties d'antenne 10 et 18 et de la puce 42 lorsque le passeport est fermé. L'écran est réalisé de préférence sur toute la surface de la page mais peut se limiter à un rectangle dont la superficie englobe la superficie délimitée par les deux parties d'antenne 10 et 18. L'écran est réalisé par sérigraphie d'encre conductrice ou d'un polymère conducteur et est soit formé d'une couche uniforme soit formé d'un quadrillage ou d'un damier dont la dimension de la largeur des lignes ou des cases est de l'ordre de quelques millimètres et de préférence égal à un millimètre. Ainsi, lorsque le passeport est fermé, même si l'antenne reste planaire, aucun flux ne peut la traverser à cause de l'écran qui joue le rôle d'un blindage magnétique. L'antenne ne jouant plus son rôle d'antenne, la puce ne reçoit aucune énergie et le passeport en position fermée ne peut être lu par le lecteur.

Il va de soi que les deux modes de réalisation qui viennent d'être décrits ne sont pas limitatifs et que chacune des parties d'antenne pourrait être disposée en tout ou partie sur le plat supérieur et/ou sur le plat inférieur ou sur la page de garde supérieure et/ou la page de garde inférieure, la seule condition étant que les deux parties d'antenne soient connectées lorsque les deux pages de garde sont contrecollées avec les deux plats.

## Revendications

1. Livret d'identité comprenant une couverture en papier renforcé formée d'un plat supérieur (16 ou 46) et d'un plat inférieur (14 ou 44), un cahier intérieur dont les pages de garde supérieure (22 ou 52) et inférieure (20 ou 50) sont contrecollées respectivement au verso dudit plat supérieur et au recto dudit plat inférieur et un dispositif d'identification radiofréquence (RFID) formé d'une puce (12 ou 42) et d'une antenne connectée aux bornes de la puce, au moins une partie dudit dispositif RFID étant insérée entre ledit plat supérieur et ladite page de garde supérieure ou entre ledit plat inférieur et ladite page de garde inférieure ;
ledit livret étant **caractérisé en ce que** ladite antenne comprend une première partie d'antenne (10 ou 40) disposée sur la surface dudit plat supérieur et/ou inférieur destinée à être contrecollée avec la page de garde correspondante et une seconde partie d'antenne (18 ou 48) disposée sur la surface de ladite page de garde supérieure et/ou inférieure destinée à être contrecollée avec ledit plat correspondant, lesdites première et seconde parties d'antenne étant connectées pour constituer ladite antenne lorsque lesdites pages de garde sont contrecollées avec lesdits plats.

2. Livret d'identité selon la revendication 1, dans lequel la connexion entre les extrémités (24, 26 ou 54, 56) de ladite première partie d'antenne (10 ou 40) et les extrémités (28, 30 ou 58, 60) de ladite seconde partie d'antenne (18 ou 48) est réalisée par simple contact dû au chevauchement entre deux petites portions desdites parties d'antenne à leurs extrémités.

3. Livret d'identité selon la revendication 1, dans lequel la connexion entre les extrémités (24, 26 ou 54, 56) de ladite première partie d'antenne (10 ou 40) et les extrémités (28, 30 ou 58, 60) de ladite seconde partie d'antenne (18 ou 48) est réalisée en plaçant un point de colle conductrice sur les extrémités d'une desdites parties d'antenne.

4. Livret d'identité selon l'une des revendication 1, 2 ou 3, dans lequel ladite première partie d'antenne (10) est située entièrement sur le recto dudit plat inférieur (14) alors que ladite seconde partie d'antenne (18) est située entièrement sur le verso de ladite page de garde inférieure (20).

5. Livret d'identité selon la revendication 4, dans lequel est réalisé un écran sérigraphié sur la dernière page du cahier formant les pages centrales du livret, ledit écran venant se plaquer contre le dispositif RFID formé des deux parties d'antenne 10 et 18 et de la puce 42 lorsque le livret d'identité est fermé.

6. Livret d'identité selon l'une des revendication 1, 2 ou 3, dans lequel ladite première partie d'antenne (40) est située partiellement sur le recto dudit plat inférieur (44) et partiellement sur le verso dudit plat supérieur (46) alors que ladite seconde partie d'antenne (48) est située entièrement sur le recto de ladite page de garde supérieure (52), de manière à ce que ladite antenne constituée par juxtaposition desdites parties d'antenne après contrecollage desdites pages de garde sur lesdits plats ne soit opérationnelle que lorsque ledit livret est ouvert et à plat devant un lecteur, ledit livret ne pouvant pas être lu par ledit lecteur lorsqu'il est fermé et que ladite antenne est repliée.

7. Livret d'identité selon la revendication 6, dans lequel un joint flexible par ajout de matière conductrice telle qu'une résine époxy chargée en argent est déposé sur l'antenne à l'endroit de la pliure du livret.

8. Livret d'identité selon l'une quelconque des revendications précédentes, dans lequel lesdites première (10 ou 40) et seconde (18 ou 48) parties d'antenne sont réalisées par impression sérigraphique à l'aide d'une encre conductrice.

## Claims

1. An identity booklet including a reinforced paper cover made up of a top cover board (16 or 46) and a bottom cover board (14 or 44), an inner quire whose top (22 or 52) and bottom (20 or 50) flyleaves are laminated respectively at the back of said top cover board and on the front of said bottom cover board, and a radio frequency identification device (RFID) made up of a chip (12 or 42) and an antenna connected to the terminals of the chip, with at least a part of said RFID being inserted between said top cover board and said top flyleaf or between said bottom cover board and said bottom flyleaf;
said booklet being **characterized in that** said antenna includes a first part of the antenna (10 or 40) placed on the surface of said top and/or bottom cover board designed to be laminated with the corresponding flyleaf and a second part of the antenna (18 or 48) placed on the surface of said top and/or bottom flyleaf designed to be laminated with said corresponding cover board, said first and second parts of the antenna being connected to constitute said antenna when said flyleaves are laminated with said cover boards.

2. The identity booklet according to claim 1, in which the connection between the ends (24, 26 or 54, 56) of said first part of the antenna (10 or 40) and the ends (28, 30 or 58, 60) of said second part of antenna (18 or 48) is made by simple contact due to the overlapping of two small portions of said parts of the antenna at their ends.

3. The identity booklet according to claim 1, in which the connection between the ends (24, 26 or 54, 56) of said first part of antenna (10 or 40) and the ends (28, 30 or 58, 60) of said second part of antenna (18 or 48) is made by placing a spot of conductive glue at the ends of said antenna parts.

4. The identity booklet according to any of claims 1, 2 or 3, in which said first part of antenna (10) is located completely in front of said bottom cover board (14) while said second part of antenna (18) is located completely at the back of said bottom flyleaf (20).

5. The identity booklet according to claim 4, in which a screen is screen printed on the last page of the quire making up the central pages of the booklet, said screen being flat against the RFID made up of two parts of the antenna 10 and 18 and the chip 42 when the identity booklet is closed.

6. The identity booklet according to one of claims 1, 2 or 3, in which said first part of antenna (40) is partly located at the back of said bottom cover board (44) and partly on the front of said top cover board (46) while said second part of the antenna (48) is located completely in front of said top flyleaf (52), so that said antenna made up by juxtaposition of said antenna parts after lamination of said flyleaves on said cover boards is operational only when said booklet is opened flat in front of a reader, said booklet not being read by said reader when it is closed and said antenna is folded up.

7. The identity booklet according to claim 6, in which a flexible joint by adding conductive material such as epoxy resin loaded with silver is placed on the antenna at the location of the fold of the booklet.

8. The identity booklet according to any of the previous claims in which said first (10 or 40) and second (18 or 48) parts of antenna are made by screen printing using conductive ink.

## Patentansprüche

1. Ausweisbüchlein mit einem Umschlag aus verstärktem Papier, der aus einer oberen Einbanddecke (16 oder 46) und einer unteren Einbanddecke (14 oder 44) gebildet ist, einer inneren Heftlage, deren oberes (22 oder 52) und unteres (20 oder 50) Vorsatzblatt jeweils mit der Rückseite der oberen Einbanddecke und der Vorderseite der unteren Einbanddecke zusammengeklebt sind, und einer Hochfrequenzidentifikationsvorrichtung (RFID), die aus einem Chip (12 oder 42) und einer mit den Anschlüssen des Chip verbundenen Antenne gebildet ist, wobei mindestens ein Teil der RFID-Vorrichtung zwischen der oberen Einbanddecke und dem oberen Vorsatzblatt oder zwischen der unteren Einbanddecke und dem unteren Vorsatzblatt eingeführt ist,
wobei das Büchlein **dadurch gekennzeichnet ist, dass** die Antenne einen ersten Antennenteil (10 oder 40), der auf der Oberfläche der oberen und/oder unteren Einbanddecke angeordnet ist, die dazu bestimmt ist, mit dem entsprechenden Vorsatzblatt zusammengeklebt zu werden, und einen zweiten Antennenteil (18 oder 48) aufweist, der auf der Oberfläche des oberen und/oder unteren Vorsatzblatts angeordnet ist, die dazu bestimmt ist, mit der entsprechenden Einbanddecke zusammengeklebt zu werden, wobei der erste und der zweite Antennenteil zur Bildung der Antenne verbunden werden, wenn die Vorsatzblätter mit den Einbanddecken zusammengeklebt werden.

2. Ausweisbüchlein nach Anspruch 1, bei dem die Verbindung zwischen den Enden (24, 26 oder 54, 56) des ersten Antennenteils (10 oder 40) und den Enden (28, 30 oder 58, 60) des zweiten Antennenteils (18 oder 48) durch einfachen Kontakt aufgrund der Überlappung zwischen zwei kleinen Abschnitten der Antennenteile an ihren Enden hergestellt wird.

3. Ausweisbüchlein nach Anspruch 1, bei dem die Verbindung zwischen den Enden (24, 26 oder 54, 56) des ersten Antennenteils (10 oder 40) und den Enden (28, 30 oder 58, 60) des zweiten Antennenteils (18 oder 48) hergestellt wird, indem ein Leitkleberpunkt auf die Enden eines der Antennenteile platziert wird.

4. Ausweisbüchlein nach einem der Ansprüche 1, 2 oder 3, bei dem der erste Antennenteil (10) ganz auf der Vorderseite der unteren Einbanddecke (14) angeordnet ist, während der zweite Antennenteil (18) ganz auf der Rückseite des unteren Vorsatzblattes (20) angeordnet ist.

5. Ausweisbüchlein nach Anspruch 4, bei dem auf der letzten Seite der die mittleren Seiten des Büchleins bildenden Heftlage eine Siebdruckschablone ausgeführt ist, die gegen die RFID-Vorrichtung drückt, die aus den beiden Antennenteilen (10) und (18) und dem Chip (42) gebildet ist, wenn das Ausweisbüchlein geschlossen ist.

6. Ausweisbüchlein nach einem der Ansprüche 1, 2 oder 3, bei dem der erste Antennenteil (40) teilweise auf der Vorderseite der unteren Einbanddecke (44) und teilweise auf der Rückseite der oberen Einbanddecke (46) angeordnet ist, während der zweite Antennenteil (48) ganz auf der Vorderseite des oberen Vorsatzblatts (52) angeordnet ist, so dass die sich durch das Nebeneinanderliegen der Antennenteile nach dem Zusammenkleben der Vorsatzblätter mit den Einbanddecken ergebende Antenne nur dann in Betrieb ist, wenn das Büchlein offen und flach vor einem Lesegerät liegt, wobei das Büchlein nicht von dem Lesegerät gelesen werden kann, wenn es geschlossen ist und die Antenne eingeklappt ist.

7. Ausweisbüchlein nach Anspruch 6, bei dem durch Zusatz von leitendem Material wie einem silbergefüllten Epoxidharz ein flexibles Gelenk am Ort der Falzung des Büchleins an der Antenne angeordnet wird.

8. Ausweisbüchlein nach einem der vorhergehenden Ansprüche, bei dem der erste (10 oder 40) und der zweite (18 oder 48) Antennenteil durch Siebdruck mit Hilfe einer leitfähigen Farbe hergestellt werden.
